(19) **Europäisches Patentamt / European Patent Office / Office européen des brevets**

(11) **EP 3 989 609 B1**

(12) **EUROPEAN PATENT SPECIFICATION**

(45) Date of publication and mention of the grant of the patent:
**22.11.2023 Bulletin 2023/47**

(21) Application number: **20832605.8**

(22) Date of filing: **18.06.2020**

(51) International Patent Classification (IPC):
**H04W 4/70** (2018.01)     **H04W 48/12** (2009.01)

(52) Cooperative Patent Classification (CPC):
**H04W 48/12; H04W 4/70**

(86) International application number:
**PCT/CN2020/096765**

(87) International publication number:
**WO 2020/259381 (30.12.2020 Gazette 2020/53)**

(54) **METHOD FOR PROCESSING A MIB MESSAGE OF LTE SYSTEM MESSAGE, BASE STATION, AND STORAGE MEDIUM**

VERFAHREN ZUR VERARBEITUNG EINER MIB-NACHRICHT EINER LTE-SYSTEMNACHRICHT, BASISSTATION UND SPEICHERMEDIUM

PROCÉDÉ PERMETTANT DE TRAITER UN MESSAGE MIB D'UN MESSAGE DE SYSTÈME LTE, STATION DE BASE, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2019 CN 201910565875**

(43) Date of publication of application:
**27.04.2022 Bulletin 2022/17**

(73) Proprietor: **ZTE Corporation**
shenzhen Guangdong 518057 (CN)

(72) Inventors:
- **CHEN, Xiao**
  Shenzhen, Guangdong 518057 (CN)
- **FAN, Xuefeng**
  Shenzhen, Guangdong 518057 (CN)
- **WANG, Hongjian**
  Shenzhen, Guangdong 518057 (CN)
- **LIU, Yuhe**
  Shenzhen, Guangdong 518057 (CN)

(74) Representative: **Betten & Resch**
**Patent- und Rechtsanwälte PartGmbB**
**Maximiliansplatz 14**
**80333 München (DE)**

(56) References cited:
**WO-A1-2018/120184    WO-A1-2019/117770**

CN-A- 107 276 723     CN-A- 109 688 622
CN-A- 109 688 622     CN-A- 109 842 867
CN-A- 109 842 867

- ERICSSON: "Temporary SI densification for eMTC and NB-IoT", 3GPP DRAFT; R2-1814347 - TEMPORARY SI DENSIFICATION FOR EFEMTC AND FENB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Chengdu, P.R. China; 20181008 - 20181012 28 September 2018 (2018-09-28), XP051523790, Retrieved from the Internet: URL:http://www.3gpp.org/ftp/tsg%5Fran/WG2% 5FRL2/TSGR2%5F103bis/Docs/R2%2D1814347 %2Ez ip [retrieved on 2018-09-28]
- ERICSSON: "3GPP TSG-RNA WG4 Meeting #88bis R4-1812829", Addition of side condition for CGI reading delay for Rel-15 eFeMTC UE, 12 October 2018 (2018-10-12), XP051581534, DOI: 20200903162105A
- ERICSSON: "3GPP TSG-RAN WG2 Meeting #97 Tdoc R2-1701562", System information for low complexity and extended coverage, 17 February 2017 (2017-02-17), XP051212179, DOI: 20200903162211A

**Description**

**TECHNICAL FIELD**

The present application relates to the field of communications, for example, to a method and apparatus for processing a Master Information Block (MIB) message of a Long-Term Evolution (LTE) system message, a base station and a computer-readable storage medium.

**BACKGROUND**

Enhanced Machine Type Communication (eMTC) is an important branch of the Internet of Everything technology, which evolved from the LTE protocol and is designed to be more suitable for communication between things. The typical application scenario of eMTC is cocell deployment with LTE terminals, in which case eMTC terminals and LTE terminals share the same spectrum resource. Generally, the eMTC function may be enabled on an LTE cell through software update for a base station, and then the corresponding cell can provide service for both eMTC terminals and LTE terminals.

After the eMTC function is enabled on the LTE network, compared with a conventional LTE network, a schedulingInfoSIB1-BR-r13 information element is added to the Master Information Block (MIB) in the system message to indicate the scheduling information for SystemInformationBlockType1-Bandwidth Reduced (SIB1-BR). The scheduling information is provided in the spare field in the MIB. However, since the above protocol extension is not considered in some LTE terminals produced in early years, such terminals will perform non-zero check processing on the schedulingInfoSIB1-BR-r13 information element and the subsequent spare part in the MIB message, and if the check is successful, the subsequent SIB and other messages will be decoded to access the corresponding cell, and if the check fails, the MIB message cannot be decoded normally, thus resulting in the LTE terminals not being able to access the corresponding cell normally.

Patent literature CN109688622A discloses an information transmission method, an information receiving method, a network device and a terminal device. The method includes the following steps: determining a sending position of a first type of main information block MIB and a sending position of a second type of MIB in a system information sending period; sending the first type of main information block MIB at the sending position of the first type of MIB, and sending the second type of MIB at the sending position of the second type of MIB, wherein the first type of MIB and the second type of MIB are different.

Patent literature WO2018/120184A1 discloses a method and device for transmitting information during a cell switch capable of solving a problem of a high switch failure rate resulting from mismatch of an MIB message reception method of a terminal with an MIB message transmission method of a target base station. During a cell switch, before a terminal receives an MIB message from a target base station, a network side notifies the terminal of whether a target cell supports eMTC or an MIB message transmission method of the target cell, such that the terminal can receive an MIB message with a corresponding method compatible with the method used by the target base station to send the MIB message, thereby increasing a switch success rate, and reducing switch delay.

While the above publications may achieve their intended purposes, there is still a need for a new and improved MIB message of LTE system message, a base station and a computer-readable storage medium.

**SUMMARY**

The present application provides a method for processing a Master Information Block (MIB) message of an LTE system message, a base station, and a computer-readable storage medium, for the purpose of solving a problem in the existing technology, to at least a certain extent, that some LTE terminals cannot access the cell normally due to their inability to recognize MIB messages.

A first aspect of the invention comprises a method for processing a Master Information Block (MIB) message of an LTE system message as set forth in claim 1. The method comprises: acquiring re-establishment information for LTE terminals, access quantity information for LTE terminals, and access quantity information for eMTC terminals in a cell; determining a sending quantity of MIB messages for LTE terminals on a preset subframe comprising subframe #0 according to the re-establishment information for LTE terminals, the access quantity information for LTE terminals, and the access quantity information for eMTC terminals, and sending the MIB messages for LTE terminals on subframe #0 in accordance with the determined sending quantity; whereby in the MIB messages for the LTE terminals the schedulingInfoSIB 1-BR-r13 field is set to 0.

A second aspect of the invention comprises a computer-readable storage medium storing a computer program, as set forth in claim 11.

A third aspect of the invention comprises a base station as set forth in claim 12. Some preferred embodiments are defined in the dependent claims.

## BRIEF DESCRIPTION OF DRAWINGS

Fig. 1 is a flowchart of a method for processing an MIB message of an LTE system message provided in a first embodiment of the present application;

Fig. 2 is a schematic structural diagram of an apparatus for processing an MIB message of an LTE system message provided in a second embodiment of the present application;

Fig. 3 is a schematic structural diagram of another apparatus for processing an MIB message of an LTE system message provided in the second embodiment of the present application;

Fig. 4 is a schematic structural diagram of a processing unit provided in the second embodiment of the present application;

Fig. 5 is a schematic structural diagram of yet another apparatus for processing an MIB message of an LTE system message provided in the second embodiment of the present application; and

Fig. 6 is a schematic structural diagram of yet another apparatus for processing an MIB message of an LTE system message provided in the second embodiment of the present application.

## DETAILED DESCRIPTION

In order to solve the problem in the existing technology, to at least a certain extent, that some LTE terminals cannot access the cell normally due to their inability to recognize MIB messages, the present application provides a method for processing a Master Information Block (MIB) message of an LTE system message, in which the sending proportion of MIB messages for LTE on subframe #0 is determined according to the re-establishment situation of LTE terminals and the access situation of LTE terminals and of eMTC terminals, and the base station is enabled to send MIB messages for LTE terminals on the preset subframe according to the above-mentioned sending proportion, so that the LTE terminals can access the network normally. The present application will be described hereinafter with reference to the accompanying drawings and embodiments. The particular embodiments described herein are only intended to explain the present application, and are not intended to limit the present application.

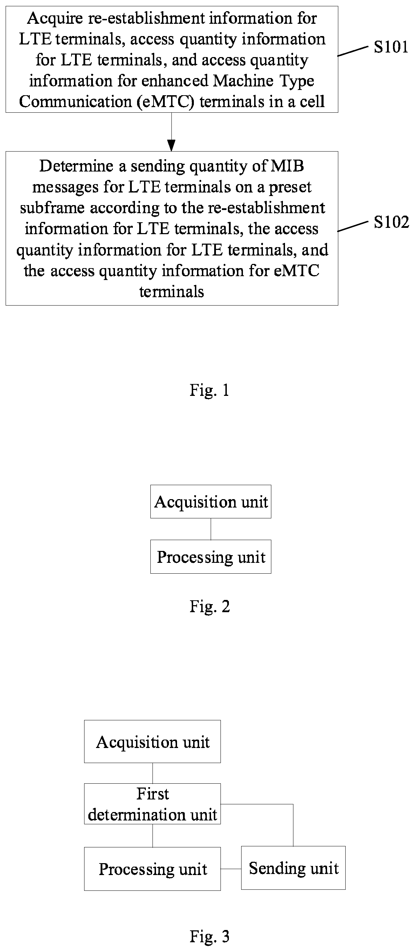

A first embodiment of the present application provides a method for processing an MIB message of an LTE system message, which is applied to the base station side. The flow of the method is as shown in Fig. 1, which includes steps S101 to S102.

At S101, re-establishment information for LTE terminals, access quantity information for LTE terminals, and access quantity information for eMTC terminals in a cell are acquired.

After an LTE cell is enabled to support the eMTC function, a network information collection database is used to record indicators related to the switching and re-establishment of LTE terminals in that cell, and the base station uses the network information collection database to acquire re-establishment information for LTE terminals in the cell and access quantity information for LTE terminals and eMTC terminals.

The re-establishment information for LTE terminals described in the embodiment of the present application is abnormality information for LTE terminals, that is, the information about LTE terminals that have been re-established due to the failure of switching caused by the failure of non-zero check processing of the schedulingInfoSIB1-BR-r13 information element and the subsequent spare field part of the MIB message.

In the embodiment of the present application, the re-establishment information for LTE terminals as well as the access quantity information for LTE terminals and the access quantity information for eMTC terminals in the cell are acquired in accordance with a preset period, and the access proportion of LTE terminals is calculated based on the access quantity information for LTE terminals and eMTC terminals. This access proportion is denoted by the symbol x, which is the access quantity of LTE terminals/(the access quantity of LTE terminals + the access quantity of eMTC terminals). In other words, for ease of implementation, the embodiment of the present application performs data acquisition and determines the sending proportion of MIB message for LTE in accordance with a prescribed preset period.

The length of the preset period described in the embodiment of the present application may be set as needed, which is not limited in the present application.

At S102, a sending quantity of MIB messages for LTE terminals on a preset subframe is determined according to the re-establishment information for LTE terminals, the access quantity information for LTE terminals, and the access quantity information for eMTC terminals.

In the embodiment of the present application, the sending proportion of MIB message for LTE on the preset subframe, i.e., subframe #0, is determined and adjusted based on the re-establishment situation of LTE terminals and the situation of the access quantity of LTE terminals and of eMTC terminals, so as to mitigate the problem of abnormality of a cell network indicator caused by abnormally accessing LTE terminals while not affecting the access of eMTC terminals.

The main application scenario of the embodiment of the present application is as follows: after the eMTC function is enabled in the LTE network, the schedulingInfoSIB1-BR-r13 information element is added to the MIB message to indicate the scheduling information for SystemInformationBlockType1-BR (SIB1). The scheduling information is provided on the spare field in the MIB. The spare field in the MIB was originally 10 bits, and the length of the MIB message of protocol R13 and later versions did not change. However, 5 bits in the original 10-bit spare field are occupied by schedulingInfoSIB1-BR-r13, i.e., when schedulingInfoSIB1-BR-r13 takes the value of 0, it means that SystemInformationBlockType1-BR is not scheduled, and when the LTE cell does not support the eMTC function, this part of the information element is filled with 0. It may be understood that when the LTE cell does not support the eMTC function, the schedulingInfoSIB 1-BR-r13 field in the MIB message sent for the LTE terminal is 0; and when the LTE cell supports the eMTC function, the schedulingInfoSIB1-BR-r13 field in the MIB message sent for the eMTC terminal is not 0. In other words, the eMTC-specific field means that some of the original spare field bits are enabled. Since the extension of the 3rd Generation Partnership Project (3GPP) R13 protocol is not considered in some early-produced LTE terminals, such terminals will perform non-zero check processing on the schedulingInfoSIB1-BR-r13 information element and the subsequent spare part in the MIB message, and if the check is successful, the subsequent SIB and other messages will be decoded to access the corresponding cell, and if the check fails, the MIB message cannot be decoded normally, thus resulting in the LTE terminals not being able to access the corresponding cell normally.

Due to the special characteristics of such LTE terminals, after some cells or frequency bands in the network are enabled to support the eMTC function, the number of cells that users of such LTE terminals can access will be significantly reduced, and the user experience will also be degraded; and network performance indicators such as those related to the switching and re-establishment on the network side will also change significantly, which may cause a large number of user complaints in serious cases and even affect the eMTC deployment process.

In addition, in the time domain, MIB messages for LTE are sent only on subframe #0, while MIB messages for eMTC may be repeatedly sent on subframe #9 of the previous radio frame and on subframe #0 of the current radio frame.

In the embodiment of the present application, the base station determines the sending proportion of MIB messages for LTE on subframe #0 according to the re-establishment situation of LTE terminals and the access situation of LTE terminals and of eMTC terminals, that is, the MIB messages are sent for LTE terminals on subframe #0 in accordance with a certain proportion, so as to achieve normal access of LTE terminals to the network, thus effectively solving the problem that some LTE terminals cannot access the cell normally due to their inability to recognize MIB messages.

The embodiment of the present application addresses the problem that since protocol extension is not considered in the early-produced terminals, the condition of the checking determination is to parse the original MIB messages for LTE, thus leading to the inability of some terminals to access the LTE cell that has been enabled to support the eMTC function. Therefore, the embodiment of the present application adds the sending of MIB messages for LTE on the network side, so as to reduce the bit error rate of such terminals in parsing MIB messages, thereby increasing the access quantity of abnormally accessing LTE terminals as much as possible without affecting the access of the eMTC terminals.

In the embodiment of the present application, after step S101 and before step S102, i.e. before determining a sending quantity of MIB messages for LTE terminals on a preset subframe, during the current preset period, it is determined whether an average indicator for re-establishment of LTE terminals exceeds a preset threshold and, in response to the average indicator for re-establishment of LTE terminals exceeding the preset threshold, the sending quantity of MIB messages for LTE terminals on the preset subframe is determined according to the re-establishment information for LTE terminals, the access quantity information for LTE terminals, and the access quantity information for eMTC terminals, or, in response to the average indicator for re-establishment of LTE terminals not exceeding the preset threshold, MIB messages continue to be sent in accordance with a sending quantity of MIB messages for LTE terminals determined during a previous preset period. That is, in the embodiment of the present application, it is first determined whether the average indicator for re-establishment of LTE terminals during the preset period exceeds the preset threshold M, and in response to the average indicator for re-establishment of LTE terminals exceeding the preset threshold, the sending proportion of MIB messages for LTE on subframe #0 is determined based on the re-establishment information for LTE terminals, the access quantity information for LTE terminals and eMTC terminals, or, in response to the average indicator for re-establishment of LTE terminals not exceeding the preset threshold, the MIB messages continue to be sent in accordance with the current sending proportion of MIB messages for LTE. Here, the average indicator for re-establishment is the number of re-establishments of LTE terminals/a total number of switches of LTE terminals in the cell during the preset period. It can be understood that in the embodiment of the present application, a preset threshold is set as an initiation condition for whether to start determining the sending proportion of MIB messages for LTE on subframe #0, and by setting a reasonable preset threshold, abnormal access of LTE terminals can be reduced without affecting normal access of eMTC terminals.

Step S102 of the embodiment of the present application includes: determining a pre-distortion coefficient according to the average indicator for re-establishment of LTE terminals, the preset threshold, an access proportion of LTE terminals, and a bit error rate of non-zero check of LTE terminals, and calculating the sending quantity of MIB messages for LTE terminals on the preset subframe during the current preset period based on the pre-distortion coefficient and the sending quantity of MIB messages for LTE terminals on the preset subframe during the previous preset period, where the access proportion of LTE terminals is the proportion of an access quantity of LTE terminals to an access quantity of eMTC terminals.

In the embodiment of the present application, the pre-distortion coefficient is determined based on the average indicator for re-establishment of LTE terminals, the preset threshold M, the access proportion of LTE terminals, and the bit error rate of non-zero check of LTE terminals, and then the sending proportion of MIB messages for LTE on subframe #0 after adjustment is calculated based on this pre-distortion coefficient and the sending proportion of MIB messages for LTE on the current subframe #0. In other words, the sending proportion of MIB messages for LTE on subframe #0 determined in the embodiment of the present application is a value that may be adjusted in real time, and by adjusting the sending proportion of MIB messages for LTE and MIB messages for eMTC in real time, the abnormal access rate of LTE terminals can be controlled within an acceptable range.

In the embodiment of the present application, since the schedulingInfoSIB1-BR-r13 information element in the MIB message occupies 5 bits of the spare field in the MIB, if the schedulingInfoSIB1-BR-r13 information element in the MIB message occupies 1 bit of the spare field in the MIB, the bit error rate of non-zero check of LTE terminals is 1/5*100%, i.e., 20%. That is, in the embodiment of the present application, the bit error rate of non-zero check of LTE terminals is the proportion value of the number of bits of the spare field occupied by the r13 information element, and the higher the number of bits of the spare field occupied by the r13 information element, the bit error rate of non-zero check of LTE terminals increases accordingly. That is, the bit error rate of non-zero check of LTE terminals described in the embodiment of the present application is as follows: the proportion of the number of bits of the spare field of the MIB message occupied by the protocol R13 information element to the total number of bits of the spare field; and the number of bits of the spare field of the MIB message occupied by the protocol R13 information element is acquired from a protocol mapping information table.

In the embodiment of the present application, determining a pre-distortion coefficient according to the average indicator for re-establishment of LTE terminals, the preset threshold M, the access proportion of LTE terminals, and a bit error rate of non-zero check of LTE terminals includes: determining a weight value for the sending proportion of MIB messages for LTE terminals according to the average indicator for re-establishment of LTE terminals and the preset threshold M; calculating an adjustment coefficient according to the access proportion of LTE terminals and the bit error rate of non-zero check of LTE terminals; and determining the pre-distortion coefficient based on the weight value and the adjustment coefficient.

In the embodiment of the present application, the weight value of the sending proportion of MIB messages for LTE terminals and the adjustment coefficient are determined first, then the pre-distortion coefficient is calculated based on the weight value of the sending proportion of MIB messages for LTE terminals and the adjustment coefficient, and finally the sending proportion of MIB messages for LTE on subframe #0 after adjustment is calculated based on the pre-distortion coefficient and the sending proportion of MIB messages for LTE on the current subframe #0.

In the embodiment of the present application, determining a weight value for the sending proportion of MIB messages for LTE terminals according to the average indicator for re-establishment of LTE terminals and the preset threshold M includes: the weight value $\lambda = ((i-M)/M) * 100\%$, where i is the average indicator for re-establishment of LTE terminals and M is the preset threshold.

Calculating an adjustment coefficient according to the access proportion of LTE terminals and the bit error rate of non-zero check of LTE terminals includes: the adjustment coefficient $\alpha = x * y$, where x is the access quantity of LTE terminals/(the access quantity of LTE terminals + the access quantity of eMTC terminals) and y is the bit error rate of non-zero check of LTE terminals.

In the embodiment of the present application, determining the pre-distortion coefficient based on the weight value and the adjustment coefficient includes: calculating the pre-distortion coefficient $s = \alpha * (1 + \lambda)$ for the current preset period according to the adjustment coefficient $\alpha$ and the weight value $\lambda$.

Assuming that the current sending proportion of MIB messages for LTE is z, then the calculated sending proportion $\Delta\%$ of MIB messages for LTE is s*z.

In the embodiment of the present application, after step S102, i.e. after determining the sending quantity of MIB messages for LTE terminals on the preset subframe, the method further includes: determining whether the sending quantity of MIB messages for eMTC terminals during the current preset period exceeds a preset quantity threshold and, in response to the sending quantity of MIB messages for eMTC terminals during the current preset period exceeding the preset quantity threshold, continuing to send MIB messages in accordance with a sending quantity of MIB messages for LTE terminals determined during a previous preset period.

It is determined whether the sending proportion $(1-\Delta\%)$ of MIB messages for eMTC exceeds the preset threshold when sending MIB messages for LTE in accordance with the determined sending proportion, and in response to the sending proportion $(1-\Delta\%)$ of MIB messages for eMTC exceeding the preset threshold, MIB messages for LTE continue to be sent according to the sending proportion for the previous preset period. That is, in the embodiment of the present application, the sending proportion of MIB messages for LTE on subframe #0 is adjusted in real time so as to adjust this sending proportion to an optimal value, i.e., the cell network indicator caused by the abnormally accessing LTE terminals reach within an acceptable range (i.e., the preset threshold M). Moreover, it is also ensured that the sending proportion of MIB messages for eMTC does not exceed the preset threshold, thus ensuring normal access of the eMTC terminals. If the proportion of MIB messages corresponding to LTE terminals determined by means of the above method affects the normal access of eMTC terminals, the program execution is skipped and the sending proportion of MIB messages for LTE is redetermined.

In the embodiment of the present application, the method further includes: while determining the sending quantity of MIB messages for LTE terminals on the preset subframe, adjusting the distribution form of the sending of the MIB message; and sending, in accordance with the determined sending quantity, MIB messages of which the distribution form have been adjusted, where the distribution form includes a random distribution form and a uniform distribution form. In other words, in the embodiment of the present application, the sending proportion of the MIB message for LTE on subframe #0 is set in accordance with the above method, and after determining the sending proportion of MIB messages for LTE, the distribution form of the sending of the MIB message is further adjusted, so as to adapt to the reception characteristics of different terminals by adjusting the distribution form of the sending of the MIB message.

When the uniform distribution form is adopted, MIB messages for LTE are sent evenly among MIB messages for eMTC, while when the random distribution form is adopted, MIB messages for LTE are sent randomly among MIB messages for eMTC.

In the embodiment of the present application, MIB messages for LTE and MIB messages for eMTC are sent on subframe #0 at a certain sending proportion and in a certain distribution form.

A second embodiment of the present application provides an apparatus for processing a Master Information Block (MIB) message of an LTE system message, which, as shown in Fig. 2, includes an acquisition unit and a processing unit that are mutually coupled.

The acquisition unit is configured to acquire re-establishment information for LTE terminals, access quantity information for LTE terminals, and access quantity information for eMTC terminals in a cell.

In the embodiment of the present application, the acquisition unit acquires the re-establishment information for LTE terminals, the access quantity information for LTE terminals and eMTC terminals in the cell through a network information collection database.

The re-establishment information for LTE terminals described in the embodiment of the present application is abnormality information for LTE terminals, that is, the information about LTE terminals that have been re-established due to the failure of switching caused by the failure of non-zero check processing of the schedulingInfoSIB1-BR-r13 information element and the subsequent spare field part of the MIB message.

The processing unit is configured to determine a sending quantity of MIB messages for LTE terminals on a preset subframe according to the re-establishment information for LTE terminals, the access quantity information for LTE terminals, and the access quantity information for eMTC terminals.

In the embodiment of the present application, the processing unit is configured to determine a sending quantity of MIB messages for LTE terminals on subframe #0 according to the re-establishment information for LTE terminals, the access quantity information for LTE terminals, and the access quantity information for eMTC terminals.

In other words, in the embodiment of the present application, the processing unit determines and adjusts the sending proportion of MIB messages for LTE on subframe #0 based on the re-establishment situation of LTE terminals and the situation of the access quantity of LTE terminals and of eMTC terminals, so as to mitigate the problem of abnormality of the cell network indicator caused by abnormally accessing LTE terminals while not affecting the access of eMTC terminals.

Fig. 3 is a schematic structural diagram of another apparatus for processing an MIB message of an LTE system message provided in the embodiment of the present application. The apparatus further includes a first determination unit, the first determination unit being configured to, during a current preset period, determine whether an average indicator for re-establishment of LTE terminals exceeds a preset threshold and trigger the processing unit in response to the average indicator for re-establishment of LTE terminals exceeding the preset threshold, or trigger a sending unit in response to the average indicator for re-establishment of LTE terminals not exceeding the preset threshold, where the average indicator for re-establishment is the quotient of the number of re-establishments of LTE terminals and a total number of switches of LTE terminals in the cell during the preset period; and the sending unit configured to send, according to the trigger of the first determination unit, MIB messages in accordance with the sending quantity of MIB messages for LTE terminals determined during a previous preset period. In other words, in the embodiment of the present application, a preset threshold is set and used as an initiation condition for whether to start determining the sending proportion of MIB messages for LTE on subframe #0, and by setting a reasonable preset threshold, abnormal access of LTE terminals can be reduced without affecting normal access of eMTC terminals. In this embodiment, the acquisition unit is configured to acquire the re-establishment information for LTE terminals, the access quantity information for LTE terminals, and the access quantity information for eMTC terminals in the cell in accordance with a preset period.

In the embodiment of the present application, the processing unit is configured to determine a pre-distortion coefficient according to the average indicator for re-establishment of LTE terminals, the preset threshold M, an access proportion of LTE terminals, and a bit error rate of non-zero check of LTE terminals, and calculate the sending quantity of MIB messages for LTE terminals on the preset subframe during the current preset period based on the pre-distortion coefficient and the sending quantity of MIB messages for LTE terminals on the preset subframe during the previous preset period,, In other words, the sending proportion of MIB messages for LTE on subframe #0 determined in the embodiment of the present application is a value that may be adjusted in real time, and by adjusting the sending proportion of MIB messages for LTE and MIB messages for eMTC in real time, the abnormal access rate of LTE terminals can be controlled within an acceptable range.

In the embodiment of the present application, since the schedulingInfoSIB1-BR-r13 information element in the MIB message occupies 5 bits of the spare field in the MIB, if the schedulingInfoSIB1-BR-r13 information element in the MIB message occupies 1 bit of the spare field in the MIB, the bit error rate of non-zero check of LTE terminals is 1/5*100%, i.e., 20%. That is, in the embodiment of the present application, the bit error rate of non-zero check of LTE terminals is the proportion value of the spare field occupied by the r13 information element, and the higher the number of bits of the spare field occupied by the r13 information element, the bit error rate of non-zero check of LTE terminals increases accordingly.

In the embodiment of the present application, the processing unit is configured to determine the pre-distortion coefficient according to the average indicator for re-establishment of LTE terminals, the preset threshold, the access proportion of LTE terminals, and the bit error rate of non-zero check of LTE terminals in the following manner: determining a weight value for the sending proportion of MIB messages for LTE terminals according to the average indicator for re-establishment of LTE terminals and the preset threshold M; calculating an adjustment coefficient according to the access proportion of LTE terminals and the bit error rate of non-zero check of LTE terminals; determining the pre-distortion coefficient based on the weight value and the adjustment coefficient.

In the embodiment of the present application, the weight value of the sending proportion of MIB messages for LTE terminals and the adjustment coefficient are determined first, then the pre-distortion coefficient is calculated based on the weight value of the sending proportion of MIB messages for LTE terminals and the adjustment coefficient, and finally the sending proportion of MIB messages for LTE on subframe #0 after adjustment is calculated based on the pre-distortion coefficient and the sending proportion of MIB messages for LTE on the current subframe #0.

The bit error rate of non-zero check of LTE terminals described in the embodiment of the present application is as follows: the proportion of the number of bits of the spare field of the MIB message occupied by the protocol R13 information element to the total number of bits of the spare field; and in the embodiment of the present application, the number of bits of the spare field of the MIB message occupied by the protocol R13 information element is acquired from a protocol mapping information table.

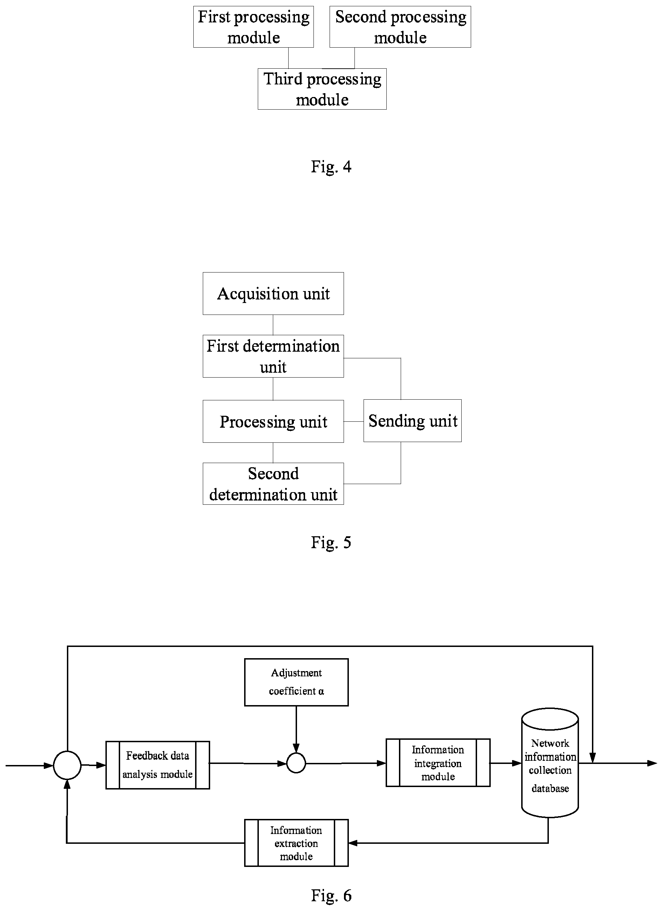

As shown in Fig. 4, in the embodiment of the present application, the processing unit includes: a first processing module, a second processing module, and a third processing module.

The first processing module is configured to calculate the weight value $\lambda = ((i-M)/M)* 100\%$, where i is the average indicator for re-establishment of LTE terminals and M is the preset threshold.

The second processing module is configured to calculate the adjustment coefficient $\alpha = x *y$, where x is the access quantity of LTE terminals/(the access quantity of LTE terminals + the access quantity of eMTC terminals) and y is the bit error rate of non-zero check of LTE terminals.

The third processing module is configured to calculate a pre-distortion coefficient $s = \alpha*(1 + \lambda)$ for the current preset period according to the adjustment coefficient $\alpha$ and the weight value $\lambda$.

As shown in Fig. 5, in the embodiment of the present application, the apparatus further includes a second determination unit, where the second determination unit is configured to determine whether a sending quantity of MIB messages for eMTC terminals during the current preset period exceeds a preset quantity threshold and, in response to the sending quantity of MIB messages for eMTC terminals during the current preset period exceeding the preset quantity threshold, trigger a sending unit to continue to send MIB messages in accordance with a sending quantity of MIB messages for LTE terminals determined during a previous preset period, or in response to the sending quantity of MIB messages for eMTC terminals during the current preset period not exceeding the preset quantity threshold, trigger the sending unit to send MIB messages for LTE terminals in accordance with the currently determined sending quantity.

In the embodiment of the present application, the sending proportion of MIB messages for LTE on subframe #0 is adjusted in real time so as to adjust this sending proportion to an optimal value, i.e., the cell network indicator caused by the abnormally accessing LTE terminals reaches within an acceptable range (i.e., the preset threshold M). Moreover, it is also ensured that the sending proportion of MIB messages for eMTC does not exceed the preset threshold, thus ensuring normal access of the eMTC terminals. If the proportion of MIB messages corresponding to LTE terminals determined by means of the above method affects the normal access of eMTC terminals, the program execution is skipped and the sending proportion of MIB messages for LTE is redetermined.

In the embodiment of the present application, the sending unit of the apparatus is further configured to adjust the distribution form of the sending of the MIB message and to send, in accordance with the determined sending quantity, MIB messages of which the distribution form has been adjusted, where the distribution form includes a random distribution form and a uniform distribution form. In other words, in the embodiment of the present application, the sending proportion of the MIB message for LTE on subframe #0 is set in accordance with the above method, and after determining the sending proportion of MIB messages for LTE, the distribution form of the sending of the MIB message is further adjusted, so as to adapt to the reception characteristics of different terminals by adjusting the distribution form of the sending of the MIB message.

When the uniform distribution form is adopted, MIB messages for LTE are sent evenly among MIB messages for eMTC, while when the random distribution form is adopted, MIB messages for LTE are sent randomly among MIB messages for eMTC.

In the embodiment of the present application, MIB messages for LTE and MIB messages for eMTC are sent on subframe #0 at a certain sending proportion and in a certain distribution form.

In order to explain and illustrate the apparatus described in the embodiment of the present application, the present application will be described below by means of an embodiment in conjunction with Fig. 6:

Through the information extraction module (equivalent to the above-mentioned acquisition unit in the embodiment of the present application), the abnormality information for the access of LTE terminals and the information about the access situation of eMTC and LTE terminals are extracted from the network information collection database, and the data within the preset period (where this parameter may be set) are counted and sent to a feedback data analysis module upon the arrival of the preset period. In other words, the abnormality information described in the embodiment of the present application is as follows: after the LTE cell is enabled to support the eMTC function, the indicator related to the switching or re-establishment of the cell is recorded, and in response to calculating that the average indicator of the switching of LTE terminals exceeds a preset threshold within a preset period T, the cell is determined to be abnormal, and the abnormality information and the sending proportion of MIB messages for LTE in the previous period are recorded and fed back, and used as the basis for determining the pre-distortion coefficient afterwards.

The relevant data information (including the abnormality information and the terminal access situation) in each preset period is recorded and counted to obtain an average value.

By the determination module (equivalent to the first determination unit described above in the embodiment of the present application), it is determined whether the average indicator for re-establishment of LTE terminals within the preset period exceeds the preset threshold and, in response to the average indicator for re-establishment of LTE terminals exceeding the preset threshold, the process proceeds to the next step, and in response to the average indicator for re-establishment of LTE terminals not exceeding the preset threshold, the process ends; the feedback data analysis module (equivalent to the first processing module described above in the embodiment of the present application) analyses the data fed back by the information extraction module and calculates the weights of the sending proportions of MIB messages for LTE and MIB messages for eMTC on subframe #0; based on the occupancy of the SIB 1-BR scheduling field (schedulingInfoSIB 1-BR-r13) in the spare bits in the MIB message for eMTC, the possible bit error rate (here the bit error rate is the probability of dropping an MIB message by the terminal due to a failed check) of non-zero check of abnormal LTE terminals is calculated, and an adjustment coefficient is derived in combination with the current proportions of access of eMTC and LTE terminals to the network, where this part of function is equivalent to the function of the second processing module described above in the embodiment of the present application; and based on the calculated proportion weight values and the calculated adjustment coefficient, and combined with the real-time data information changes, the information integration module (equivalent to the third processing module described above in the embodiment of the present application) integrates the two to calculate the pre-distortion coefficient.

The sending proportion $\Delta\%$ of MIB messages for LTE is finally obtained based on the pre-distortion coefficient, and at this time it is necessary to determine whether the sending proportion $(1-\Delta\%)$ of MIB messages for eMTC on subframe #0 exceeds the preset threshold H, and in response to $(1-\Delta\%)$ exceeding this threshold, MIB messages for LTE and eMTC will continue to be sent according to the sending proportion in the previous period, but the pre-distortion effect may be achieved by adjusting different distribution forms, and it may be determined through tracking the network indicators in the next period, whether a certain effect is achieved; and in response to $(1-\Delta\%)$ not exceeding the preset threshold, MIB messages for LTE and eMTC are sent according to the currently calculated sending proportion and distribution form.

In response to eMTC not being enabled in the cell or the average indicator for re-establishment of LTE terminals not exceeding the preset threshold within a preset period, no pre-distortion processing is performed and the current system message continues to be sent.

An apparatus not falling under the scope of the claims is illustrated below by means of two application embodiments:

First application embodiment

The information extraction module is configured to extract the abnormal values of the average indicator for re-establishment of LTE terminals in the cell and the access proportions of LTE terminals and eMTC terminals; and the determination module is configured to continue sending MIB messages for LTE normally in response to determining that the eMTC function is not enabled in the cell, or to continue sending system messages in the same proportion and distribution form as in the previous period in response to the average cell network indicator being normal. In response to the sending proportion of MIBs for LTE in the previous period being not 0, the sending proportion is maintained and MIB messages for LTE continue to be sent. In response to the sending proportion of MIB messages for LTE in the previous period being 0, MIB messages for eMTC continue to be sent normally.

Second application embodiment

In response to the average cell network indicator in a preset period exceeding a preset threshold, the sending proportion of MIB messages for LTE is adjusted. The apparatus includes the following modules.
An information extraction module is configured to extract abnormal values of the average cell network indicator and the access proportions of LTE terminals and eMTC terminals.
A determination module is configured to transfer the current average cell network indicator and the access proportion of multiple terminals into a feedback data analysis module in response to determining that the average cell network indicator is abnormal.
A feedback data analysis module is configured to calculate, based on the access proportion of the multiple terminals, a weight value $\lambda$ that needs to be increased for the sending proportion that needs to be adjusted due to the abnormal indicator, i.e., the current proportion of abnormality that exceeds the preset threshold M, where the current average cell network indicator is i and the preset threshold is M, then the weight value $\lambda$ that needs to be increased is $((i - M)/M)*100\%$.
An adjustment coefficient module is configured to calculate the possible bit error rate of non-zero check of abnormal LTE terminals, and an adjustment coefficient is derived in combination with the current proportions of access of eMTC and LTE terminals to the network. The adjustment coefficient is calculated in the following manner: the current LTE terminal access proportion is x and the bit error rate is y, then the adjustment coefficient $\alpha$ is $x*y$.
An information integration module is configured to calculate the pre-distortion coefficient s for this period based on the adjustment coefficient $\alpha$ and the weight value $\lambda$. The way of calculation is as follows: the pre-distortion coefficient $s = \alpha*(1+\lambda)$. For example: the current sending proportion of MIB messages for LTE is z, then the calculated sending proportion $\Delta\%$ of MIB messages for LTE is $s*z$.
At this point, it is determined whether the sending proportion $(1-\Delta\%)$ of MIB messages for eMTC has exceeded the preset threshold H, and in response to $(1-\Delta\%)$ exceeding the preset threshold H, the adaptive pre-distortion system is exited regardless of whether the network indicator has reached the preset threshold M, and the system messages continue to be sent according to the sending proportion of the previous period, but it is possible to send MIB messages for LTE and eMTC according to the sending proportion of the previous period by adjusting the distribution form, and to continue to track the network indicator; and in response to $(1-\Delta\%)$ not exceeding the preset threshold H, MIB messages for LTE and eMTC are sent according to the currently calculated sending proportion and the current distribution form.
The above is an example of implementation for one preset period. In each period, adjustments are made in real time based on the feedback results, and the cycle is repeated until a preset threshold is reached or a preset threshold is exceeded, then the cycle is jumped out.
A third embodiment of the present application provides a computer-readable storage medium as set forth in claim 11.
A fourth embodiment of the present application provides a base station as set forth in claim 12.

**Claims**

1. A method for processing a Master Information Block, MIB, message of a Long-Term Evolution, LTE, system message, performed by a base station, the method comprising:

   acquiring re-establishment information for LTE terminals, access quantity information for LTE terminals, and access quantity information for enhanced Machine Type Communication, eMTC, terminals in a cell (S101);
   determining a sending quantity of MIB messages for LTE terminals on a preset subframe comprising subframe #0 according to the re-establishment information for LTE terminals, the access quantity information for LTE terminals, and the access quantity information for eMTC terminals (S102); and

sending the MIB messages for LTE terminals on subframe #0 in accordance with the determined sending quantity whereby in the MIB messages for the LTE terminals, the schedulingInfoSIB1-BR-r13 field is set to 0.

2. The method of claim 1, wherein
acquiring re-establishment information for LTE terminals, access quantity information for LTE terminals, and access quantity information for eMTC terminals in a cell comprises:

acquiring the re-establishment information for LTE terminals, the access quantity information for LTE terminals, and the access quantity information for eMTC terminals in the cell in accordance with a preset period; and
after acquiring re-establishment information for LTE terminals, access quantity information for LTE terminals, and access quantity information for eMTC terminals in a cell, and before determining a sending quantity of MIB messages for LTE terminals on a preset subframe, the method further comprises:

during a current preset period, determining whether an average indicator for re-establishment of LTE terminals exceeds a preset threshold;
in response to the average indicator for re-establishment of LTE terminals exceeding the preset threshold, determining the sending quantity of MIB messages for LTE terminals on the preset subframe according to the re-establishment information for LTE terminals, the access quantity information for LTE terminals, and the access quantity information for eMTC terminals; and
in response to the average indicator for re-establishment of LTE terminals not exceeding the preset threshold, sending MIB messages in accordance with a sending quantity of MIB messages for LTE terminals determined during a previous preset period;
wherein the average indicator for re-establishment is the quotient of a number of re-establishments of LTE terminals and a total number of switches of LTE terminals in the cell during the preset period.

3. The method of claim 2, wherein determining the sending quantity of MIB messages for LTE terminals on the preset subframe according to the re-establishment information for LTE terminals, the access quantity information for LTE terminals, and the access quantity information for eMTC terminals comprises:

determining a pre-distortion coefficient according to the average indicator for re-establishment of LTE terminals, the preset threshold, an access proportion of LTE terminals, and a bit error rate of non-zero check of LTE terminals; and
calculating the sending quantity of MIB messages for LTE terminals on the preset subframe during the current preset period based on the pre-distortion coefficient and the sending quantity of MIB messages for LTE terminals on the preset subframe during the previous preset period;
wherein the access proportion of LTE terminals is the proportion of an access quantity of LTE terminals to an access quantity of eMTC terminals.

4. The method of claim 3, wherein the bit error rate of non-zero check of LTE terminals is the proportion of the number of bits of a spare field of the MIB message occupied by a protocol R13 information element to the total number of bits of the spare field; and the number of bits of the spare field of the MIB message occupied by the protocol R13 information element is acquired from a protocol mapping information table.

5. The method of claim 3, wherein determining a pre-distortion coefficient according to the average indicator for re-establishment of LTE terminals, the preset threshold, an access proportion of LTE terminals, and a bit error rate of non-zero check of LTE terminals comprises:

determining a weight value for the sending quantity of MIB messages for LTE terminals according to the average indicator for re-establishment of LTE terminals and the preset threshold;
calculating an adjustment coefficient according to the access proportion of LTE terminals and the bit error rate of non-zero check of LTE terminals; and
determining the pre-distortion coefficient based on the weight value and the adjustment coefficient.

6. The method of claim 5, wherein determining a weight value for the sending quantity of MIB messages for LTE terminals according to the average indicator for re-establishment of LTE terminals and the preset threshold comprises:

$$\text{the weight value } \lambda = ((i - M)/M)*100\%,$$

wherein i is the average indicator for re-establishment of LTE terminals and M is the preset threshold.

7. The method of claim 5, wherein calculating an adjustment coefficient according to the access proportion of LTE terminals and the bit error rate of non-zero check of LTE terminals comprises:

$$\text{calculating the adjustment coefficient } \alpha = x*y,$$

wherein

$$x = \text{the access quantity of LTE terminals / (the access quantity of LTE terminals + the}$$

$$\text{access quantity of eMTC terminals),}$$

and y is the bit error rate of non-zero check of LTE terminals.

8. The method of claim 5, wherein determining the pre-distortion coefficient based on the weight value and the adjustment coefficient comprises:
calculating a pre-distortion coefficient $s = \alpha*(1 + \lambda)$ for the current preset period, wherein $\alpha$ is the adjustment coefficient and $\lambda$ is the weight value.

9. The method of any one of claims 1 to 8, after determining a sending quantity of MIB messages for LTE terminals on a preset subframe, further comprising:

   determining whether a sending quantity of MIB messages for eMTC terminals during the current preset period exceeds a preset quantity threshold;
   in response to the sending quantity of MIB messages for eMTC terminals during the current preset period exceeding the preset quantity threshold, sending MIB messages in accordance with a sending quantity of MIB messages for LTE terminals determined during a previous preset period; and
   in response to the sending quantity of MIB messages for eMTC terminals during the current preset period not exceeding the preset quantity threshold, sending MIB messages for LTE terminals in accordance with the currently determined sending quantity.

10. The method of claim 1, while determining a sending quantity of MIB messages for LTE terminals on a preset subframe, further comprising:

    adjusting a distribution form of the sending of the MIB message; and
    sending, in accordance with the determined sending quantity, MIB messages of which the distribution form has been adjusted,
    wherein the distribution form includes a random distribution form and a uniform distribution form.

11. A computer-readable storage medium storing a computer program which, when executed by a processor comprised in a base station, causes the base station to perform the method for processing a Master Information Block, MIB, message of a Long-Term Evolution, LTE, system message of any one of claims 1 to 10.

12. Abase station, comprising:

    a processor, and
    a memory storing a computer program executable by the processor,
    wherein the computer program, when executed by the processor, causes the base station to perform the method for processing a Master Information Block, MIB, message of a Long-Term Evolution, LTE, system message of any one of claims 1 to 10.

**Patentansprüche**

1. Verfahren zur Verarbeitung einer Master Information Block-, MIB-, Nachricht einer Long-Term Evolution-, LTE-, System nachricht, das von einer Basisstation durchgeführt wird, wobei das Verfahren umfasst:

   Erfassen von Wiederherstellungsinformationen für LTE-Endgeräte, Zugriffsmengeninformationen für LTE-Endgeräte, und Zugriffsmengeninformationen für Enhanced Machine Type Communication-, eMTC-, Endgeräte in einer Zelle (S101);
   Bestimmen einer Sendemenge von MIB-Nachrichten für LTE-Endgeräte auf einem voreingestellten Teilframe, das Teilframe #0 umfasst, entsprechend den Wiederherstellungsinformationen für LTE-Endgeräte, den Zugriffsmengeninformationen für LTE-Endgeräte, und den Zugriffsmengeninformationen für eMTC-Endgeräte (S102); und
   Senden der MIB-Nachrichten für LTE-Endgeräte auf Teilframe #0 entsprechend der bestimmten Sendemenge; wobei in den MIB-Nachrichten für die LTE-Endgeräte das Feld schedulingInfoSIB1-BR-r13 auf 0 gesetzt ist.

2. Verfahren nach Anspruch 1, wobei
   das Erfassen von Wiederherstellungsinformationen für LTE-Endgeräte, von Zugriffsmengeninformationen für LTE-Endgeräte, und von Zugriffsmengeninformationen für eMTC-Endgeräte in einer Zelle umfasst:

   Erfassen der Wiederherstellungsinformationen für LTE-Endgeräte, der Zugriffsmengeninformationen für LTE-Endgeräte, und der Zugriffsmengeninformationen für eMTC-Endgeräte in der Zelle in Übereinstimmung mit einer voreingestellten Periode;
   und
   nach dem Erfassen von Wiederherstellungsinformationen für LTE-Endgeräte, von Zugriffsmengeninformationen für LTE-Endgeräte, und von Zugriffsmengeninformationen für eMTC-Endgeräte in einer Zelle, und vor dem Bestimmen einer Sendemenge von MIB-Nachrichten für LTE-Endgeräte auf einem voreingestellten Teilframe, das Verfahren ferner umfasst:

   während einer momentanen voreingestellten Periode, Bestimmen, ob ein Durchschnittsindikator für die Wiederherstellung von LTE-Endgeräten eine voreingestellte Schwelle überschreitet;
   in Antwort darauf, dass der Durchschnittsindikator für die Wiederherstellung von LTE-Endgeräten die voreingestellte Schwelle überschreitet, Bestimmen der Sendemenge von MIB-Nachrichten für LTE-Endgeräte auf dem voreingestellten Teilframe entsprechend den Wiederherstellungsinformationen für LTE-Endgeräte, den Zugriffsmengeninformationen für LTE-Endgeräte, und den Zugriffsmengeninformationen für eMTC-Endgeräte; und
   in Antwort darauf, dass der Durchschnittsindikator für die Wiederherstellung von LTE-Endgeräten die voreingestellte Schwelle nicht überschreitet, Senden von MIB-Nachrichten in Übereinstimmung mit einer Sendemenge von MIB-Nachrichten für LTE-Endgeräte, die während einer vorherigen voreingestellten Periode bestimmt ist;
   wobei der Durchschnittsindikator für die Wiederherstellung der Quotient einer Zahl von Wiederherstellungen von LTE-Endgeräten und einer Gesamtzahl von Switches von LTE-Endgeräten in der Zelle während der voreingestellten Periode ist.

3. Verfahren nach Anspruch 2, wobei das Bestimmen der Sendemenge von MIB-Nachrichten für LTE-Endgeräte auf dem voreingestellten Teilframe gemäß den Wiederherstellungsinformationen für LTE-Endgeräte, den Zugriffsmengeninformationen für LTE-Endgeräte, und den Zugriffsmengeninformationen für eMTC-Endgeräte umfasst:

   Bestimmen eines Vorverzerrungskoeffizienten entsprechend dem Durchschnittsindikator für die Wiederherstellung von LTE-Endgeräten, der voreingestellten Schwelle, einem Zugriffsanteil von LTE-Endgeräten, und einer Bitfehlerrate einer Nicht-Null-Prüfung von LTE-Endgeräten; und
   Berechnen der Sendemenge von MIB-Nachrichten für LTE-Endgeräte auf dem voreingestellten Teilframe während der momentanen voreingestellten Periode basierend auf dem Vorverzerrungskoeffizienten und der Sendemenge von MIB-Nachrichten für LTE-Endgeräte auf dem voreingestellten Teilframe während der vorherigen voreingestellten Periode;
   wobei der Zugriffsanteil von LTE-Endgeräten der Anteil einer Zugriffsmenge von LTE-Endgeräten zu einer Zugriffsmenge von eMTC-Endgeräten ist.

4. Verfahren nach Anspruch 3, wobei die Bitfehlerrate der Nicht-Null-Prüfung von LTE-Endgeräten das Verhältnis der Zahl von Bits eines Ersatzfelds der MIB-Nachricht, besetzt durch ein Protokoll R13 Informationselement, zu der Gesamtzahl von Bits des Ersatzfelds ist; und wobei die Zahl von Bits des Ersatzfelds der MIB-Nachricht, besetzt durch das Protokoll R13 Informationselement, von einer Protokollmappinginformationstabelle erfasst wird.

5. Verfahren nach Anspruch 3, wobei das Bestimmen eines Vorverzerrungskoeffizienten entsprechend dem Durchschnittsindikator für die Wiederherstellung von LTE-Endgeräten, der voreingestellten Schwelle, einem Zugriffsanteil von LTE-Endgeräten, und einer Bitfehlerrate der Nicht-Null-Prüfung von LTE-Endgeräten umfasst:

   Bestimmen eines Gewichtungswerts für die Sendemenge von MIB-Nachrichten für LTE-Endgeräte entsprechend dem Durchschnittsindikator für die Wiederherstellung von LTE-Endgeräten und der voreingestellten Schwelle;
   Berechnen eines Anpassungskoeffizienten entsprechend dem Zugriffsanteil von LTE-Endgeräten und der Bitfehlerrate der Nicht-Null-Prüfung von LTE-Endgeräten; und
   Bestimmen des Vorverzerrungskoeffizienten basierend auf dem Gewichtungswert und dem Anpassungskoeffizienten.

6. Verfahren nach Anspruch 5, wobei das Bestimmen eines Gewichtungswerts für die Sendemenge von MIB-Nachrichten für LTE-Endgeräte entsprechend dem Durchschnittsindikator für die Wiederherstellung von LTE-Endgeräten und der voreingestellten Schwelle umfasst:

$$\text{der Gewichtungswert } \lambda = ((i - M)/M)*100\%,$$

wobei i der Durchschnittsindikator für die Wiederherstellung von LTE-Endgeräten ist, und M die voreingestellte Schwelle ist.

7. Verfahren nach Anspruch 5, wobei das Berechnen eines Anpassungskoeffizienten entsprechend dem Zugriffsanteil von LTE-Endgeräten und der Bitfehlerrate der Nicht-Null-Prüfung von LTE-Endgeräten umfasst:

$$\text{Berechnen des Anpassungskoeffizienten } \alpha = x*y,$$

wobei

$$x = \text{die Zugriffsmenge von LTE-Endgeräten } / (\text{die Zugriffsmenge von LTE-Endgeräten} + \text{die Zugriffsmenge von eMTC-Endgeräten}),$$

und y die Bitfehlerrate der Nicht-Null-Prüfung von LTE-Endgeräten ist.

8. Verfahren nach Anspruch 5, wobei das Bestimmen des Vorverzerrungskoeffizienten basierend auf dem Gewichtungswert und dem Anpassungskoeffizienten umfasst:
   Berechnen einer Vorverzerrungskoeffizienten $s = \alpha*(1 + \lambda)$ für die momentane voreingestellte Periode, wobei $\alpha$ der Anpassungskoeffizient ist, und $\lambda$ der Gewichtungswert ist.

9. Verfahren nach einem der Ansprüche 1 bis 8, das nach dem Bestimmen einer Sendemenge von MIB-Nachrichten für LTE-Endgeräte auf einem voreingestellten Teilframe ferner umfasst:

   Bestimmen, ob eine Sendemenge von MIB-Nachrichten für eMTC-Endgeräte während der momentanen voreingestellten Periode eine voreingestellte Mengenschwelle überschreitet;
   in Antwort darauf, dass die Sendemenge von MIB-Nachrichten für eMTC-Endgeräte während der momentanen voreingestellten Periode die voreingestellte Mengenschwelle überschreitet, Senden von MIB-Nachrichten entsprechend einer Sendemenge von MIB-Nachrichten für LTE-Endgeräte, die während einer vorherigen voreingestellten Periode bestimmt ist; und
   in Antwort darauf, dass die Sendemenge von MIB-Nachrichten für eMTC-Endgeräte während der momentanen voreingestellten Periode die voreingestellte Mengenschwelle nicht überschreitet, Senden von MIB-Nachrichten für LTE-Endgeräte in Übereinstimmung mit der momentan bestimmten Sendemenge.

**10.** Verfahren nach Anspruch 1, das während der Bestimmung einer Sendemenge von MIB-Nachrichten für LTE-Endgeräte auf einem voreingestellten Teilframe ferner umfasst:

Anpassen einer Verteilungsform des Sendens der MIB-Nachricht; und
Senden, in Übereinstimmung mit der bestimmten Sendemenge, von MIB-Nachrichten, deren Verteilungsform angepasst worden ist,
wobei die Verteilungsform eine zufällige Verteilungsform und eine gleichförmige Verteilungsform enthält.

**11.** Computerlesbares Speichermedium, das ein Computerprogramm speichert, welches bei Ausführung durch einen in einer Basisstation enthaltenen Prozessor die Basisstation dazu veranlasst, das Verfahren zum Verarbeiten einer Master Information Block-, MIB-, Nachricht, einer Long-Term Evolution-, LTE-, System nachricht nach einem der Ansprüche 1 bis 10 durchzuführen.

**12.** Basisstation, umfassend:

einen Prozessor, und
einen Speicher, der ein durch den Prozessor ausführbares Computerprogramm speichert,
wobei das Computerprogramm bei Ausführung durch den Prozessor die Basisstation dazu veranlasst, das Verfahren zur Verarbeitung einer Master Information Block-, MIB-, Nachricht, einer Long-Term Evolution-, LTE-, System nachricht nach einem der Ansprüche 1 bis 10 durchzuführen.


**Revendications**

**1.** Un procédé de traitement d'un message de bloc d'informations maître, MIB, d'un message système d'évolution à long terme, LTE, mis en oeuvre par une station de base, le procédé comprenant :

le fait d'acquérir des informations de rétablissement pour des terminaux LTE, des informations de quantité d'accès pour des terminaux LTE et des informations de quantité d'accès pour des terminaux de communication de type machine améliorés, eMTC, dans une cellule (S 101) ;
le fait de déterminer une quantité d'envoi de messages MIB pour des terminaux LTE sur une sous-trame prédéfinie comprenant la sous-trame #0 en fonction des informations de rétablissement pour des terminaux LTE, des informations de quantité d'accès pour des terminaux LTE, et des informations de quantité d'accès pour des terminaux eMTC (S 102) ; et
le fait d'envoyer les messages MIB pour des terminaux LTE sur la sous-trame #0 conformément à la quantité d'envoi déterminée ; de sorte que, dans les messages MIB pour les terminaux LTE, le champ schedulingInfoSIB 1-BR-r13 est mis à 0.

**2.** Le procédé selon la revendication 1, dans lequel
l'acquisition des informations de rétablissement pour des terminaux LTE, des informations de quantité d'accès pour des terminaux LTE et des informations de quantité d'accès pour des terminaux eMTC dans une cellule comprend :

le fait d'acquérir les informations de rétablissement pour des terminaux LTE, les informations de quantité d'accès pour des terminaux LTE et les informations de quantité d'accès pour des terminaux eMTC dans la cellule en conformité avec une période prédéfinie ;
et
après avoir acquis des informations de rétablissement pour des terminaux LTE, des informations de quantité d'accès pour des terminaux LTE et des informations de quantité d'accès pour des terminaux eMTC dans une cellule, et avant de déterminer une quantité d'envoi de messages MIB pour des terminaux LTE sur une sous-trame prédéfinie, le procédé comprend en outre :

pendant une période prédéfinie en cours, le fait de déterminer si un indicateur moyen de rétablissement de terminaux LTE dépasse un seuil prédéfini ;
en réponse au fait que l'indicateur moyen de rétablissement des terminaux LTE dépasse le seuil prédéfini, le fait de déterminer la quantité d'envoi de messages MIB pour des terminaux LTE sur la sous-trame prédéfinie en fonction des informations de rétablissement pour des terminaux LTE, les informations de quantité d'accès pour des terminaux LTE, et les informations sur la quantité d'accès pour des terminaux eMTC ; et

**14**

en réponse au fait que l'indicateur moyen de rétablissement de terminaux LTE ne dépasse pas le seuil prédéfini, le fait d'envoyer des messages MIB conformément à une quantité d'envoi de messages MIB pour des terminaux LTE déterminée au cours d'une période prédéfinie précédente ;

l'indicateur moyen de rétablissement étant le quotient d'un nombre de rétablissements de terminaux LTE et d'un nombre total de commutations de terminaux LTE dans la cellule pendant la période prédéfinie.

3. Le procédé selon la revendication 2, dans lequel la détermination de la quantité d'envoi de messages MIB pour des terminaux LTE sur la sous-trame prédéfinie en fonction des informations de rétablissement pour des terminaux LTE, des informations de quantité d'accès pour des terminaux LTE et des informations de quantité d'accès pour des terminaux eMTC comprend :

le fait de déterminer un coefficient de pré-distorsion en fonction de l'indicateur moyen de rétablissement de terminaux LTE, du seuil prédéfini, d'une proportion d'accès de terminaux LTE et d'un taux d'erreur binaire de contrôle non nul de terminaux LTE ; et

le fait de calculer la quantité d'envoi de messages MIB pour des terminaux LTE sur la sous-trame prédéfinie pendant la période prédéfinie actuelle sur la base du coefficient de pré-distorsion et de la quantité d'envoi de messages MIB pour des terminaux LTE sur la sous-trame prédéfinie pendant la période prédéfinie précédente ;

la proportion d'accès de terminaux LTE étant la proportion d'une quantité d'accès de terminaux LTE par rapport à une quantité d'accès de terminaux eMTC.

4. Le procédé selon la revendication 3, dans lequel le taux d'erreur sur les bits de contrôle non nul des terminaux LTE est la proportion du nombre de bits d'un champ de réserve du message MIB occupé par un élément d'information du protocole R13 par rapport au nombre total de bits du champ de réserve ; et le nombre de bits du champ de réserve du message MIB occupé par l'élément d'information de protocole R13 est acquis à partir d'une table d'informations de mappage de protocole.

5. Le procédé selon la revendication 3, dans lequel la détermination d'un coefficient de pré-distorsion en fonction de l'indicateur moyen de rétablissement de terminaux LTE, du seuil prédéfini, d'une proportion d'accès de terminaux LTE, et d'un taux d'erreur binaire de contrôle non nul de terminaux LTE comprend :

le fait de déterminer une valeur de pondération pour la quantité d'envoi de messages MIB pour des terminaux LTE en fonction de l'indicateur moyen de rétablissement de terminaux LTE et du seuil prédéfini ;

le fait de calculer un coefficient d'ajustement en fonction de la proportion d'accès de terminaux LTE et du taux d'erreur binaire de contrôle non nul de terminaux LTE ; et

le fait de déterminer le coefficient de pré-distorsion en fonction de la valeur de pondération et du coefficient d'ajustement.

6. Le procédé selon la revendication 5, dans lequel la détermination d'une valeur de pondération pour la quantité d'envoi de messages MIB pour des terminaux LTE en fonction de l'indicateur moyen de rétablissement de terminaux LTE et du seuil prédéfini comprend :

$$\text{la valeur de pondération } \lambda = ((i - M)/M)*100\%,$$

i étant l'indicateur moyen de rétablissement de terminaux LTE et M étant le seuil prédéfini.

7. Le procédé selon la revendication 5, dans lequel le calcul d'un coefficient d'ajustement en fonction de la proportion d'accès de terminaux LTE et du taux d'erreur binaire de contrôle non nul de terminaux LTE comprend :

$$\text{le fait de calculer le coefficient d'ajustement } \alpha = x*y,$$

$$x = \text{la quantité d'accès de terminaux LTE / (la quantité d'accès de terminaux LTE} + \text{la quantité d'accès de terminaux eMTC),}$$

et y étant le taux d'erreur binaire de contrôle non nul de terminaux LTE.

**8.** Le procédé selon la revendication 5, dans lequel la détermination du coefficient de pré-distorsion sur la base de la valeur de pondération et du coefficient d'ajustement comprend :
le fait de calculer un coefficient de pré-distorsion s = $\alpha*(1 + \lambda)$ pour la période prédéfinie en cours, $\alpha$ étant le coefficient d'ajustement et $\lambda$ étant la valeur de pondération.

**9.** Le procédé selon l'une quelconque des revendications 1 à 8, après détermination d'une quantité d'envoi de messages MIB pour des terminaux LTE sur une sous-trame prédéfinie, comprenant en outre :

le fait de déterminer si une quantité d'envoi de messages MIB pour des terminaux eMTC pendant la période prédéfinie en cours dépasse un seuil de quantité prédéfini ;
en réponse au fait que la quantité d'envoi de messages MIB pour des terminaux eMTC pendant la période prédéfinie actuelle dépasse le seuil de quantité prédéfini, le fait d'envoyer des messages MIB conformément à une quantité d'envoi de messages MIB pour des terminaux LTE déterminée pendant une période prédéfinie précédente ; et
en réponse au fait que la quantité d'envoi de messages MIB pour des terminaux eMTC pendant la période prédéfinie actuelle ne dépasse pas le seuil de quantité prédéfini, le fait d'envoyer des messages MIB pour des terminaux LTE conformément à la quantité d'envoi actuellement déterminée.

**10.** Le procédé selon la revendication 1, comprenant en outre, tout en déterminant une quantité d'envoi de messages MIB pour des terminaux LTE sur une sous-trame prédéfinie :

le fait d'ajuster une forme de distribution de l'envoi du message MIB ; et
le fait, en fonction de la quantité d'envoi déterminée, d'envoyer des messages MIB dont la forme de distribution a été ajustée,
la forme de distribution comprenant une forme de distribution aléatoire et une forme de distribution uniforme.

**11.** Un support de stockage lisible par ordinateur stockant un programme informatique qui, lorsqu'il est exécuté par un processeur compris dans une station de base, amène la station de base à mettre en oeuvre le procédé de traitement d'un message de bloc d'informations maître, MIB, d'un message de système d'évolution à long terme, LTE, selon l'une quelconque des revendications 1 à 10.

**12.** Une station de base, comprenant :

un processeur, et
une mémoire stockant un programme informatique exécutable par le processeur,
le programme informatique, lorsqu'il est exécuté par le processeur, amenant la station de base à mettre en oeuvre le procédé de traitement d'un message de bloc d'informations maître, MIB, d'un message système d'évolution à long terme, LTE, selon l'une quelconque des revendications 1 à 10.

Acquire re-establishment information for LTE terminals, access quantity information for LTE terminals, and access quantity information for enhanced Machine Type Communication (eMTC) terminals in a cell

— S101

Determine a sending quantity of MIB messages for LTE terminals on a preset subframe according to the re-establishment information for LTE terminals, the access quantity information for LTE terminals, and the access quantity information for eMTC terminals

— S102

Fig. 1

Acquisition unit

Processing unit

Fig. 2

Acquisition unit

First determination unit

Processing unit — Sending unit

Fig. 3

```
┌──────────────────┐   ┌──────────────────┐
│ First processing │   │ Second processing│
│     module       │   │     module       │
└──────────────────┘   └──────────────────┘
          │                     │
        ┌─────────────────────────┐
        │   Third processing      │
        │       module            │
        └─────────────────────────┘
```

Fig. 4

```
┌──────────────────┐
│ Acquisition unit │
└──────────────────┘
          │
┌──────────────────┐
│ First determination│
│      unit         │
└──────────────────┘
          │                ┌──────────────┐
┌──────────────────┐       │ Sending unit │
│ Processing unit  │───────│              │
└──────────────────┘       └──────────────┘
          │
┌──────────────────┐
│     Second       │
│ determination unit│
└──────────────────┘
```

Fig. 5

Fig. 6

**REFERENCES CITED IN THE DESCRIPTION**

**Patent documents cited in the description**

- CN 109688622 A

- WO 2018120184 A1